# EUROPÄISCHE PATENTSCHRIFT

(11) **EP 3 070 433 B1**
(45) Veröffentlichungstag und Bekanntmachung des Hinweises auf die Patenterteilung: **09.05.2018**
(21) Anmeldenummer: 16161117.3
(22) Anmeldetag: 18.03.2016
(51) Int. Cl.: G01C 21/34, G01C 21/36

(54) **NAVIGATIONSSYSTEM ZUR ERMITTLUNG UND AUSGABE EINER FAHRTROUTE**
NAVIGATION SYSTEM FOR DETERMINING AND OUTPUTTING A TRAVEL ROUTE
SYSTEME DE NAVIGATION DESTINE A DETERMINER ET A DELIVRER UN ITINERAIRE

(30) Priorität: 18.03.2015 DE 102015003476
(43) Veröffentlichungstag der Anmeldung: 21.09.2016
(60) Teilanmeldung: 18020111.3
(73) Patentinhaber: Preh Car Connect GmbH, 01156 Dresden (DE)
(72) Erfinder: Kolanko, Dipl.-Inform. (FH) Jan, 01157 Dresden (DE)

(56) Entgegenhaltungen:
- DE-A1-102008 005 796
- JP-A- H10 176 929
- JP-A- 2006 275 958

## Beschreibung

Die Erfindung betrifft ein Navigationssystem zur Ermittlung und Ausgabe einer Fahrtroute für ein Fahrzeug und ein Verfahren zum Betreiben eines derartigen Navigationssystems.

Bekannte Navigationssysteme für Fahrzeuge berechnen in effizienter Weise Fahrtrouten und führen darauf basierend Zielführungen durch, um einen Nutzer abhängig von Kartenmaterial und weiteren Informationsquellen mit möglichst effektiver Unterstützung zu einem vorgebbaren Fahrtziel zu führen. Als Zielführung wird ein Prozess bezeichnet, der den Nutzer entlang einer Fahrtroute leitet. Fahrtroutenberechnung und Zielführung werden hierin unter dem Begriff "Navigation" zusammengefasst.

Dadurch erleichtert ein Navigationssystem einem Nutzer die Fahrt in unbekanntem Terrain und ermöglicht dem Nutzer, sich stärker auf das Verkehrsgeschehen zu konzentrieren, da die Routenführung vom Navigationssystem übernommen wird. Trotzdem ist die Hemmschwelle zur Nutzung eines Navigationssystems in einem dem Nutzer weitgehend bekannten Gebiet recht hoch. Das liegt daran, dass der Nutzer aufgrund seiner guten Kenntnis des Gebietes es möglicherweise als unverhältnismäßig aufwändig erachtet, für ein unbekanntes oder neues Ziel in diesem Gebiet eine Adresseingabe vorzunehmen oder irgendwann eine bestimmte Position abzulegen, beispielsweise durch Abspeichern einer aktuellen Position.

Auf verschiedene Weise wird versucht, den Komfort und die Bedienung eines Navigationssystems zu verbessern und die Bereitschaft zur Verwendung eines Navigationssystems zu steigern. Es sind beispielsweise Navigationssysteme bekannt, die in Abhängigkeit von der Tageszeit, dem Wochentag und/oder dem aktuellen Standort wiederkehrende Fahrtrouten vorschlagen und so dem Nutzer die Eingabe erleichtern. Insbesondere wird versucht, die Navigation den Gewohnheiten des Nutzers anzupassen. Unter dem Begriff "selbst lernende Navigation" sind bereits einige Techniken bekannt und fließen in verschiedene Bereiche der Navigation ein, die den Nutzer mit Zusatzinformationen unterstützen oder eine Fahrtroute an bestimmte Gewohnheiten des Nutzers anpassen.

Das Dokument JPH10176929 beschreibt ein Navigationssystem und ein Verfahren, in dem mehrere fehlerbehaftete GPS-Positionen für einen Halteort gespeichert werden, wenn jeweils ein erstes Bewertungskriterium erfüllt ist. Diese werden als innerhalb eines Fehlerkreises um den wahren Halteort liegend zusammengefasst. Als Fahrtziel wird in einem Datenbankeintrag der wahre Halteort als Mittelwert der GPS-Positionen gespeichert.

In JP2006275958 werden Zielinformationen für Halteorte, die eine Position des Halteortes und eine dem Halteort zugeordnete Zusatzinformation aufweisen, abgespeichert.

Der Erfindung liegt die Aufgabe zu Grunde, ein insbesondere hinsichtlich seines Bedienungskomforts und seines Bedienungsumfangs verbessertes Navigationssystem zur Ermittlung und Ausgabe einer Fahrtroute für ein Fahrzeug und ein entsprechend verbessertes Verfahren zum Betreiben eines derartigen Navigationssystems anzugeben. Unter einem Fahrzeug wird hierin ein mobiles Verkehrsmittel verstanden, zum Beispiel ein Kraftfahrzeug oder ein Fahrrad, aber auch ein Luftfahrzeug oder ein Wasserfahrzeug.

Die Aufgabe wird erfindungsgemäß hinsichtlich des Verfahrens durch die Merkmale des Anspruchs 1 und hinsichtlich des Navigationssystems durch die Merkmale des Anspruchs 11 gelöst.

Vorteilhafte Ausgestaltungen der Erfindung sind Gegenstand der Unteransprüche.

Mit dem erfindungsgemäßen Verfahren wird ein Navigationssystem eines Fahrzeugs betrieben, das zur Ermittlung und Ausgabe einer Fahrtroute zu einem von einem Nutzer des Navigationssystems vorgebbaren Fahrtziel ausgebildet ist. Dabei wird eine Datenbank für von dem Nutzer auswählbare Datenbankeinträge geführt, die jeweils ein Fahrtziel aufweisen, wobei die Datenbank in einer Speichereinheit gespeichert ist. Ferner wird ein Ort, an dem das Fahrzeug anhält, als ein zu speichernder Halteort eingestuft, wenn ein vorgegebenes erstes Bewertungskriterium erfüllt ist, und für jeden als Halteort eingestuften Ort wird automatisch eine Zielinformation ermittelt, welche eine Position des Halteortes und eine dem Halteort zugeordnete Zusatzinformation aufweist.

Außerdem werden mehrere Halteorte als zusammenzufassen eingestuft, wenn ein vorgegebenes zweites Bewertungskriterium erfüllt ist. Die Zielinformationen für die Halteorte, die als zusammenzufassen eingestuft werden, werden automatisch zu einem Datenbankeintrag zusammengefasst und in der Datenbank gespeichert. Als Fahrtziel eines Datenbankeintrags für als zusammenzufassen eingestufte Halteorte wird ein die gespeicherten Positionen dieser Halteorte aufweisendes Zielgebiet in der Datenbank gespeichert. Dies ermöglicht, ein mehrfach angefahrenes Zielgebiet als Fahrtziel in der Datenbank abzulegen, statt einzelne Orte in diesem Zielgebiet als separate Orte abzulegen. Die Zielinformation für jeden Halteort, der nicht als mit einem anderen Halteort zusammenzufassen eingestuft wird, wird entweder als ein separater Datenbankeintrag der Datenbank oder unabhängig, das heißt getrennt, von der Datenbank gespeichert, zum Beispiel in einem von der Datenbank separierten elektronischen System in derselben Speichereinheit, oder in einer anderen Speichereinheit.

Bei dem erfindungsgemäßen Verfahren wird also automatisch, d. h. ohne Veranlassung oder Einwirkung des Nutzers des Navigationssystems, eine Zielinformation, die die Position eines Halteortes, an welchem das Fahrzeug anhält, und eine dem Halteort zugeordnete Zusatzinformation aufweist, ermittelt und gespeichert, sofern der Halteort ein erstes Bewertungskriterium erfüllt. Ferner werden die für mehrere dieser Halteorte ermittelten Zielinformationen zu einem Datenbankeintrag zusammengefasst, sofern diese Halteorte ein zweites Bewertungskriterium erfüllen. Der Datenbankeintrag kann von dem Nutzer ausgewählt werden.

Durch eine geeignete Wahl der Bewertungskriterien können dadurch für den Nutzer potenziell relevante Orte automatisch als von dem Nutzer auswählbare Fahrtziele gespeichert werden, ohne dass der Nutzer die Speicherung dieser Orte veranlassen oder durchführen muss. Das Verfahren ermöglicht daher eine automatische Erweiterung von dem Nutzer auswählbarer Fahrtziele des Navigationssystems, die die Nutzung des Navigationssystems erleichtert, indem sie dem Nutzer die Auswahl und Speicherung neuer potenziell relevanter Fahrtziele teilweise abnimmt. Dadurch werden der Komfort und die Bedienung des Navigationssystems verbessert. Außerdem werden durch eine Betätigung des Navigationssystems verursachte Ablenkungen des Nutzers von dem Verkehrsgeschehen und somit die Gefahr von Unfällen und gefährlichen Fahrmanövern reduziert.

Eine Ausgestaltung der Erfindung sieht vor, dass ein erster Zeitschwellenwert und ein zweiter Zeitschwellenwert vorgegeben werden, und dass das erste Bewertungskriterium als eine Bedingung dafür, einen Ort als einen zu speichernden Halteort einzustufen, aufweist, dass das Fahrzeug an dem Ort wenigstens für die Dauer des ersten Zeitschwellenwertes mit ausgeschaltetem Motor und ausgeschalteter Zielführungsfunktion des Navigationssystems oder wenigstens für die Dauer des zweiten Zeitschwellenwertes mit ausgeschaltetem Motor und eingeschalteter Zielführungsfunktion des Navigationssystems verbleibt.

Diese Ausgestaltung der Erfindung macht die Einstufung eines Ortes als einen zu speichernden Halteort von der Dauer des Anhaltens des Fahrzeugs und dem Ausschalten des Motors des Fahrzeugs abhängig. Dies ist vorteilhaft, da in der Regel nur diejenigen Orte interessante neue Fahrtziele sind, an denen das Fahrzeug längere Zeit abgestellt wird. Ferner vermag die vorgenannte Ausgestaltung der Erfindung zusätzlich zu berücksichtigen, ob die Zielführungsfunktion des Navigationssystems eingeschaltet ist. Dies berücksichtigt vorteilhaft, dass das Fahrtziel einer Fahrt bei einer eingeschalteten Zielführungsfunktion dem Navigationssystem bereits bekannt ist und es daher weniger wahrscheinlich ist, dass auf einer derartigen Fahrt potenziell relevante Fahrtziele, die dem Navigationssystem bisher noch unbekannt sind, angefahren werden.

Alternativ dazu gilt das erste Bewertungskriterium dann als erfüllt, wenn das Fahrzeug für eine vorgegebene Zeitdauer an einer geografischen Position verbleibt, wenn das Fahrzeug von allen Fahrzeuginsassen verlassen wird, wenn ein Fahrzeugschlüssel von dem Fahrzeug entfernt wird oder wenn eine Wegfahrsperre des Fahrzeugs aktiviert wird.

Eine Weitergestaltung der Erfindung sieht vor, dass bei einer Auswahl eines Fahrtziels, das als ein Zielgebiet in der Datenbank gespeichert ist, eine Fahrtroute zu einem Randort auf einem Rand des Zielgebiets ermittelt wird. Diese Weitergestaltung berücksichtigt vorteilhaft, dass sich ein Nutzer in einem häufig angefahrenen Zielgebiet in der Regel bereits auskennt, so dass es genügt, eine Fahrtroute zu einem Randort auf einem Rand des Zielgebiets auszugeben.

Eine weitere Ausgestaltung der Erfindung sieht vor, dass eine Bewertungsentfernungsdifferenz vorgegeben wird, und dass das zweite Bewertungskriterium als eine Bedingung dafür, mehrere Halteorte als zusammenzufassen einzustufen, aufweist, dass die Positionen jedes Paares dieser Halteorte nicht mehr als die Bewertungsentfernungsdifferenz voneinander entfernt sind. Das heißt, dass der Abstand zwischen den Positionen (Luftlinie) oder die kürzeste Verbindung zwischen den Positionen über Straßen oder Wege kleiner oder gleich der Bewertungsentfernungsdifferenz ist.

Diese Ausgestaltung der Erfindung macht die Zusammenfassung verschiedener Halteorte zu einem Datenbankeintrag von einer räumlichen Nähe der Halteorte abhängig. Dies berücksichtigt vorteilhaft, dass eine Korrelation weit voneinander entfernter Orte unwahrscheinlich ist und eine Zuweisung eines gemeinsamen Fahrtziels zu weit voneinander entfernter Orte nicht sinnvoll ist.

Dabei wird als Zielgebiet vorzugsweise ein Gebiet mit dem Durchmesser der vorgegebenen Bewertungsentfernungsdifferenz der oben bereits genannten Ausgestaltung der Erfindung gespeichert.

Dadurch wird die Größe des Zielgebiets sinnvoll an die vorgegebene Bewertungsentfernungsdifferenz gekoppelt. Unter dem Durchmesser eines Gebiets wird dabei gemäß einer allgemeinen mathematischen Definition des Begriffs "Durchmesser" das Supremum aller Abstände je zweier Punkte des Gebiets verstanden. Der Begriff "Durchmesser" ist daher insbesondere nicht auf kreisförmige Gebiete beschränkt.

Weitergestaltungen der beiden vorgenannten Ausgestaltungen der Erfindung sehen vor, dass eine Bewertungsuhrzeitdifferenz, eine Bewertungsanzahldifferenz und/oder eine Bewertungsbelegungsdifferenz vorgegeben werden und das zweite Bewertungskriterium als Bedingung dafür, Halteorte als zusammenzufassen einzustufen, aufweist, dass sich Uhrzeiten, zu denen die Halteorte erreicht werden, nicht mehr als die Bewertungsuhrzeitdifferenz voneinander unterscheiden, dass sich erfasste Fahrzeuginsassenanzahlen von Fahrzeuginsassen des Fahrzeugs bei dem Erreichen der Halteorte um nicht mehr als die Bewertungsanzahldifferenz voneinander unterscheiden, beziehungsweise dass sich erfasste Kofferraumbelegungen eines Kofferraums des Fahrzeugs bei dem Erreichen der Halteorte um nicht mehr als die Bewertungsbelegungsdifferenz voneinander unterscheiden.

Diese Weitergestaltungen der beiden vorgenannten Ausgestaltungen der Erfindung ermöglichen vorteilhaft, mittels Verfeinerungen des zweiten Bewertungskriteriums weitere Aspekte zu berücksichtigen, die für oder gegen eine Zusammenfassung verschiedener Halteorte zu einem Datenbankeintrag sprechen. Insbesondere wird berücksichtigt, dass ähnliche Uhrzeiten, zu denen die Halteorte erreicht werden, und/oder ähnliche Fahrzeuginsassenanzahlen und/oder Kofferraumbelegungen bei dem Erreichen von Halteorten für eine Zusammenfassung der Halteorte zu einem Datenbankeintrag sprechen.

Weitere Ausgestaltungen der Erfindung sehen vor, dass als eine einem Halteort zugeordnete Zusatzinformation ein Straßenname einer Straße, an der oder in einer Nähe derer sich der Halteort befindet, ein Name einer Sehenswürdigkeit, die sich in einer Nähe des Halteortes befindet, ein Name eines öffentlichen Gebäudes, das sich in einer Nähe des Halteortes befindet, und/oder ein Ortsname eines Orts oder eines Ortsteils, in dem sich der Halteort befindet, ermittelt und gespeichert werden.

Diese Ausgestaltungen ermöglichen vorteilhaft, Halteorte mit sinnvollen Begriffen als Zusatzinformationen zu verknüpfen und erleichtern dem Nutzer dadurch die Verwendung der Datenbank.

Eine weitere Ausgestaltung der Erfindung sieht vor, dass für jeden Halteort geprüft wird, ob eine Adressdatenbank eines Mobilgerätes, zum Beispiel eines Mobilgeräts des Nutzers oder eines anderen Fahrzeuginsassen, zur Auswertung verfügbar ist, und dass für jede verfügbare derartige Adressdatenbank ermittelt wird, ob die Adressdatenbank einen Adressdatenbankeintrag mit einer Kontaktadresse in einer Nähe des Halteortes aufweist. Ferner wird für jede dabei gefundene Kontaktadresse in einer Nähe des Halteortes zumindest eine Information des dazu gehörenden Adressdatenbankeintrags als eine dem Halteort zugeordnete Zusatzinformation gespeichert.

Diese Ausgestaltung der Erfindung ermöglicht, Kontaktadressen des Nutzers mit Halteorten zu verknüpfen und zu deren Kennzeichnung zu verwenden. Dadurch können Halteorte sinnvoll mit individuellen Daten und Präferenzen des Nutzers korreliert werden.

Eine weitere Ausgestaltung der Erfindung sieht vor, dass während einer Fahrt des Fahrzeugs automatisch in Abhängigkeit von einer aktuellen Position des Fahrzeugs und/oder von einer Fahrtrichtung der Fahrt und/oder von einer aktuellen Uhrzeit ein Datenbankeintrag der Datenbank mit einem für die Fahrt wahrscheinlichen Fahrtziel ermittelt, aktualisiert und als ein von dem Nutzer auswählbares Fahrtziel ausgegeben wird.

Diese Ausgestaltung der Erfindung ermöglicht es, dem Nutzer des Navigationssystems automatisch während einer Fahrt Vorschläge für wahrscheinliche Fahrtziele zu unterbreiten, die der Nutzer auswählen kann. Die Ausgestaltung richtet sich insbesondere auf Fahrten, für die der Nutzer bei Fahrtantritt kein Fahrtziel ausgewählt hat, und nimmt dem Nutzer somit die Eingabe eines Fahrtziels ab. Der Nutzer braucht also vorteilhaft nur noch automatisch vorgeschlagene Fahrtziele zu prüfen und gegebenenfalls ein vorgeschlagenes Fahrtziel auszuwählen.

Ein erfindungsgemäßes Navigationssystem umfasst eine Navigationssteuereinheit zur Ermittlung einer Fahrtroute für ein Fahrzeug zu einem von einem Nutzer des Navigationssystems vorgebbaren Fahrtziel, eine Ausgabeeinheit zur Ausgabe einer ermittelten Fahrtroute und eine Speichereinheit zur Speicherung einer Datenbank, in der von dem Nutzer auswählbare Datenbankeinträge, die jeweils ein Fahrtziel aufweisen, speicherbar sind.

Dabei ist die Navigationssteuereinheit dazu ausgebildet, einen Ort, an dem das Fahrzeug anhält, zu ermitteln und als einen zu speichernden Halteort einzustufen, wenn ein vorgegebenes erstes Bewertungskriterium erfüllt ist, für jeden als Halteort eingestuften Ort automatisch eine Zielinformation, die eine Position des Halteortes und eine dem Halteort zugeordnete Zusatzinformation aufweist, zu ermitteln, mehrere Halteorte als zusammenzufassen einzustufen, wenn ein vorgegebenes zweites Bewertungskriterium erfüllt ist, die Zielinformationen für die Halteorte, die als zusammenzufassen eingestuft werden, zu einem Datenbankeintrag zusammenzufassen und in der Datenbank zu speichern, und die ermittelte Zielinformation für jeden Halteort, der nicht als mit einem anderen Halteort zusammenzufassen eingestuft wird, entweder als einen separaten Datenbankeintrag der Datenbank oder unabhängig von der Datenbank zu speichern.

Ein derartiges Navigationssystem ermöglicht dessen Betreiben gemäß dem erfindungsgemäßen Verfahren mit den oben genannten Vorteilen.

Ausführungsbeispiele der Erfindung werden im Folgenden anhand von Zeichnungen näher erläutert.

Dabei zeigen:
- Figur 1: ein Blockdiagramm eines Fahrzeugs mit einem in dem Fahrzeug angeordneten Navigationssystem,
- Figur 2: ein Flussdiagramm eines Verfahrens zum Betreiben eines Navigationssystems, und
- Figur 3: eine Ausgabeeinheit eines Navigationssystems, auf dem eine Fahrtroute zu einem Randort eines Zielgebiets dargestellt ist.

Einander entsprechende Teile sind in den Figuren mit den gleichen Bezugszeichen versehen.

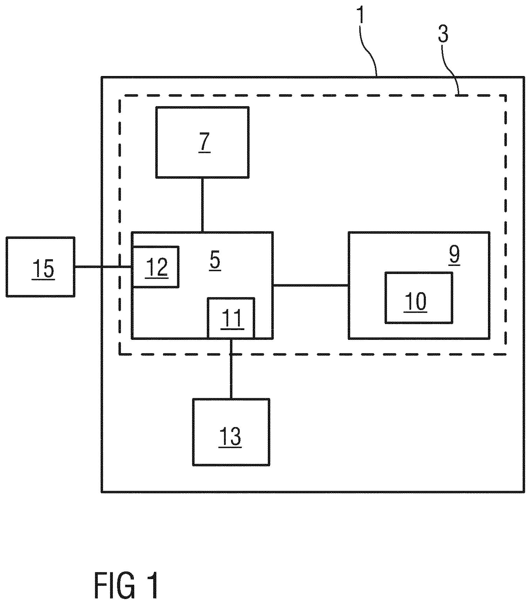

**Figur 1** zeigt ein Blockdiagramm eines Fahrzeugs 1 mit einem in dem Fahrzeug angeordneten Navigationssystem 3 zur Ermittlung und Ausgabe einer Fahrtroute für das Fahrzeug 1 zu einem von einem Nutzer des Navigationssystems 3 vorgebbaren Fahrtziel.

Das Navigationssystem 3 umfasst eine Navigationssteuereinheit 5 zur Ermittlung einer Fahrtroute zu einem vorgebbaren Fahrtziel, eine Ausgabeeinheit 7 zur Ausgabe einer ermittelten Fahrtroute und eine Speichereinheit 9 zur Speicherung insbesondere einer Datenbank 10, in der von dem Nutzer auswählbare Datenbankeinträge, die jeweils ein Fahrtziel aufweisen, speicherbar sind. Optional umfasst das Navigationssystem 3 ferner eine erste Schnittstelle 11, über die das Navigationssystem 3 mit einem Sensorsystem 13 des Fahrzeugs 1 verbindbar ist, und/oder eine zweite Schnittstelle 12, über die das Navigationssystem 3 mit einem Mobilgerät 15, zum Beispiel einem Mobilgerät 15 des Nutzers des Navigationssystems 3, verbindbar ist. Die Schnittstellen 11, 12 und/oder die Speichereinheit 9 können in die Navigationssteuereinheit 5 integriert sein.

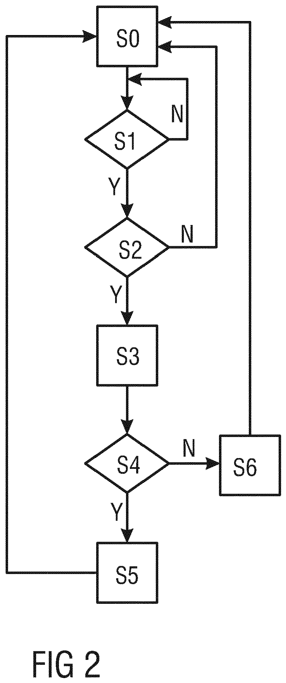

Im Folgenden wird neben Figur 1 auch auf Figur 2 Bezug genommen.

**Figur 2** zeigt ein Flussdiagramm eines Verfahrens zum Betreiben des in Figur 1 dargestellten Navigationssystems 3, das in dem Fahrzeug 1 angeordnet ist. Bei dem Verfahren werden ein erstes Bewertungskriterium und ein zweites Bewertungskriterium vorgegeben. Anhand des ersten Bewertungskriteriums wird bewertet, ob ein Ort, an dem das Fahrzeug 1 anhält, als ein zu speichernder Halteort eingestuft wird. Anhand des zweiten Bewertungskriteriums wird entschieden, ob mehrere Halteorte als zusammenzufassen eingestuft werden.

Eine Initialisierung S0 des Verfahrens wird an einen Fahrtbeginn einer Fahrt des Fahrzeugs 1 gekoppelt. Ein Fahrtbeginn wird von der Navigationssteuereinheit 5 beispielsweise durch eine Auswertung von Signalen eines eine Geschwindigkeit des Fahrzeugs 1 erfassenden Geschwindigkeitssensors des Sensorsystems 13 erkannt, die dem Navigationssystem 3 über die erste Schnittstelle 11 übermittelt werden. Alternativ oder zusätzlich wird ein Fahrtbeginn von der Navigationssteuereinheit 5 beispielsweise durch eine Auswertung von Funksignalen, z. B. von GPS-Signalen (GPS = Global Positioning System) erkannt, die die Navigationssteuereinheit 5 zur Bestimmung einer Position des Fahrzeugs 1 empfängt und auswertet.

Danach wird in einem ersten Verfahrensschritt S1 geprüft, ob das Fahrzeug 1 anhält, das heißt angehalten hat. Der erste Verfahrensschritt S1 wird solange wiederholt, bis erkannt wird, dass das Fahrzeug 1 anhält. Die Wiederholung kann in einem bestimmten zeitlichen Abstand erfolgen, zum Beispiel in einem Abstand von 60 Sekunden, so dass ein Anhalten sicher erkannt wird. Auch das Anhalten des Fahrzeugs 1 wird von der Navigationssteuereinheit 5 beispielsweise durch eine Auswertung von Signalen eines eine Geschwindigkeit des Fahrzeugs 1 erfassenden Geschwindigkeitssensors des Sensorsystems 13 erkannt, die dem Navigationssystem 3 über eine erste Schnittstelle 11 übermittelt werden, und/oder durch eine Auswertung von Funksignalen, die es zur Bestimmung einer Position des Fahrzeugs 1 empfängt und auswertet.

Wenn erkannt wird, dass das Fahrzeug 1 anhält, wird in einem zweiten Verfahrensschritt S2 anhand des ersten Bewertungskriteriums bewertet, ob der Ort, an dem das Fahrzeug anhält, als ein zu speichernder Halteort eingestuft wird. Wenn der Ort nicht als ein Halteort eingestuft wird, wird das Verfahren beendet und nach einem erneuten Fahrtbeginn neu initialisiert.

Wenn ein Ort in dem zweiten Verfahrensschritt S2 als Halteort eingestuft wird, wird in einem dritten Verfahrensschritt S3 eine Zielinformation, die eine Position des Halteortes und eine dem Halteort zugeordnete Zusatzinformation aufweist, ermittelt.

In einem vierten Verfahrensschritt S4 wird anschließend anhand des zweiten Bewertungskriteriums bewertet, ob der Halteort als mit einem bereits bekannten Halteort zusammenzufassen eingestuft wird.

Wenn der Halteort in dem vierten Verfahrensschritt S4 als mit einem anderen Halteort zusammenzufassen eingestuft wird, werden in einem fünften Verfahrensschritt S5 die Zielinformationen der als zusammenzufassen eingestuften Halteorte zu einem Datenbankeintrag zusammengefasst und in der Datenbank 10 gespeichert. Andernfalls wird in einem sechsten Verfahrensschritt S6 die für den Halteort ermittelte Zielinformation entweder als ein separater neuer Datenbankeintrag in der Datenbank 10 oder unabhängig von der Datenbank 10 gespeichert, zum Beispiel in einem von der Datenbank getrennten elektronischen System. Sowohl nach dem fünften Verfahrensschritt S5 als auch nach dem sechsten Verfahrensschritt S6 wird das Verfahren beendet und nach einem erneuten Fahrtbeginn neu initialisiert.

Alle Verfahrensschritte S1 bis S6 werden automatisch, d. h. ohne Veranlassung oder Einwirkung des Nutzers des Navigationssystems 3 von der Navigationssteuereinheit 5 ausgeführt. Dadurch werden durch das Navigationssystem 3 automatisch Fahrtziele, die für den Nutzer potenziell relevant sind, gespeichert und für den Nutzer auswählbar gemacht, ohne dass der Nutzer diese Speicherung selbst veranlassen oder durchführen muss.

Als Fahrtziel eines Datenbankeintrags für als zusammenzufassen eingestufte Halteorte wird vorzugsweise ein die gespeicherten Positionen dieser Halteorte aufweisendes Zielgebiet in der Datenbank 10 gespeichert. Die Navigationssteuereinheit 5 ist beispielsweise dazu ausgebildet, bei einer von dem Nutzer vorgenommenen Auswahl eines Fahrtziels, das als ein derartiges Zielgebiet in der Datenbank 10 gespeichert ist, eine Fahrtroute zu einem Randort auf einem Rand des Zielgebiets zu ermitteln.

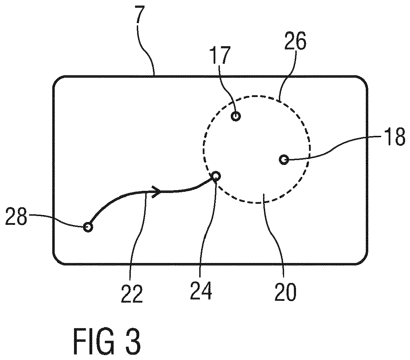

Im Folgenden wird neben Figur 1 auch auf Figur 3 Bezug genommen.

**Figur 3** zeigt schematisch eine als eine Anzeigeeinheit ausgebildete Ausgabeeinheit 7, auf der zwei als zusammenzufassen eingestufte Halteorte 17, 18, ein dazu gehöriges Zielgebiet 20 mit einem Rand 26 sowie eine Fahrtroute 22 von einem Startort 28 zu einem Randort 24 auf dem Rand 26 des Zielgebiets 20 dargestellt sind.

Das Zielgebiet 20 ist in diesem Fall kreisförmig ausgebildet, kann jedoch stattdessen rechteckig ausgebildet sein oder eine andere Form haben. Als Randort 24 wird vorzugsweise ein Ort auf dem Rand 26 des Zielgebiets 20 derart ermittelt, dass die Fahrtroute 22 möglichst kurz ist oder eine Fahrzeit zur Zurücklegung der Fahrtroute 22 möglichst gering ist.

Für das oben genannte erste Bewertungskriterium werden beispielsweise ein erster Zeitschwellenwert und ein zweiter Zeitschwellenwert vorgegeben, und als Bedingung dafür, einen Ort als einen zu speichernden Halteort 17, 18 einzustufen, wird vorgegeben, dass das Fahrzeug 1 an dem Ort wenigstens für die Dauer des ersten Zeitschwellenwertes mit ausgeschaltetem Motor und ausgeschalteter Zielführungsfunktion des Navigationssystems 3 oder wenigstens für die Dauer des zweiten Zeitschwellenwertes mit ausgeschaltetem Motor und eingeschalteter Zielführungsfunktion des Navigationssystems 3 anhält.

Zur Bewertung eines Ortes anhand des ersten Bewertungskriteriums wird von der Navigationssteuereinheit 5 eine Zeitdauer erfasst, die das Fahrzeug 1 an dem Ort anhält, und die erfasste Zeitdauer wird mit dem ersten Zeitschwellenwert verglichen, falls der Motor des Fahrzeugs 1 und die Zielführungsfunktion des Navigationssystems 3 ausgeschaltet sind, oder die erfasste Zeitdauer wird mit dem zweiten Zeitschwellenwert verglichen, falls der Motor des Fahrzeugs 1 ausgeschaltet ist und die Zielführungsfunktion des Navigationssystems 3 eingeschaltet ist. Typischerweise wird der zweite Zeitschwellenwert größer als der erste Zeitschwellenwert gewählt.

Für das oben genannte zweite Bewertungskriterium wird beispielsweise eine Bewertungsentfernungsdifferenz vorgegeben, und als eine Bedingung dafür, mehrere Halteorte 17, 18 als zusammenzufassen einzustufen, wird vorgegeben, dass die Positionen jedes Paares zweier dieser Halteorte 17, 18 nicht mehr als die Bewertungsentfernungsdifferenz voneinander entfernt sind. Dementsprechend wird von der Navigationssteuereinheit 5 für je zwei Halteorte 17, 18 geprüft, ob sie nicht mehr als die Bewertungsentfernungsdifferenz voneinander entfernt sind, um zu entscheiden, ob sie als zusammenzufassen eingestuft werden. In diesem Fall wird als Fahrtziel für als zusammenzufassen eingestufte Halteorte 17, 18 beispielsweise ein Zielgebiet 20 mit dem Durchmesser der vorgegebenen Bewertungsentfernungsdifferenz gespeichert.

Alternativ dazu kann das zweite Bewertungskriterium andere Bedingungen dafür aufweisen, Halteorte 17, 18 als zusammenzufassen einzustufen. Diese Bedingungen werden in den folgenden Beispielen erläutert:
In einem Beispiel wird eine Bewertungsuhrzeitdifferenz vorgegeben, und als Bedingung dafür, Halteorte 17, 18 als zusammenzufassen einzustufen, wird verwendet, dass sich Uhrzeiten, zu denen die Halteorte 17, 18 erreicht werden, nicht mehr als die Bewertungsuhrzeitdifferenz voneinander unterscheiden. In diesem Fall werden dementsprechend Uhrzeiten, zu denen die Halteorte 17, 18 erreicht werden, erfasst und verglichen.

In einem anderen Beispiel wird eine Bewertungsanzahldifferenz vorgegeben, und als Bedingung dafür, Halteorte 17, 18 als zusammenzufassen einzustufen, wird verwendet, dass sich erfasste Fahrzeuginsassenanzahlen von Fahrzeuginsassen des Fahrzeugs 1 bei dem Erreichen der Halteorte 17, 18 um nicht mehr als die Bewertungsanzahldifferenz voneinander unterscheiden. Dies setzt voraus, dass Fahrzeuginsassenanzahlen von Fahrzeuginsassen des Fahrzeugs 1 erfasst werden. Eine Fahrzeuginsassenanzahl wird von der Navigationssteuereinheit 5 beispielsweise durch eine Auswertung von dem Navigationssystem 3 über eine erste Schnittstelle 11 übermittelten Signalen geeigneter Sensoren des Fahrzeugs 1 ermittelt, beispielsweise von Sensoren zur Erfassung einer Sitzplatzbelegung und/oder Gurtbenutzung und/oder eines einen Fahrzeuginnenraum des Fahrzeugs 1 erfassenden optischen Sensors.

In einem weiteren Beispiel wird eine Bewertungsbelegungsdifferenz vorgegeben, und als Bedingung dafür, Halteorte 17, 18 als zusammenzufassen einzustufen, wird verwendet, dass sich erfasste Kofferraumbelegungen eines Kofferraums des Fahrzeugs 1 bei dem Erreichen der Halteorte 17, 18 um nicht mehr als die Bewertungsbelegungsdifferenz voneinander unterscheiden. Eine Kofferraumbelegung wird von der Navigationssteuereinheit 5 beispielsweise durch eine Auswertung von dem Navigationssystem 3 über eine erste Schnittstelle 11 übermittelten Signalen eines geeigneten Sensors des Fahrzeugs 1 ermittelt, der eine Kofferraumbeladung erfasst.

In einer anderen Ausgestaltung der Erfindung wird als Bedingung dafür, Halteorte 17, 18 als zusammenzufassen einzustufen, eine Kombination aus mehreren der oben genannten Bedingungen, Halteorte 17, 18 als zusammenzufassen einzustufen, verwendet.

Als eine dem Halteort 17, 18 zugeordnete Zusatzinformation wird beispielsweise ein Straßenname einer Straße, an der oder in einer Nähe derer sich der Halteort 17, 18 befindet, und/oder ein Name einer Sehenswürdigkeit, die sich in einer Nähe des Halteortes 17, 18 befindet, und/oder ein Name eines öffentlichen Gebäudes, das sich in einer Nähe des Halteortes 17, 18 befindet, und/oder ein Ortsname eines Orts oder eines Ortsteils, in dem sich der Halteort 17, 18 befindet, ermittelt.

Optional wird ferner für jeden Halteort 17, 18 geprüft, ob eine Adressdatenbank eines über eine zweite Schnittstelle 12 mit dem Navigationssystem 3 verbundenen Mobilgerätes 15 wie eines Mobiltelefons und/oder eines Flachrechners (engl.: Tablet), zum Beispiel eines Mobilgerätes 15 des Nutzers, zur Auswertung verfügbar ist. Für jede verfügbare derartige Adressdatenbank wird ermittelt, ob die Adressdatenbank einen Adressdatenbankeintrag mit einer Kontaktadresse in einer Nähe des Halteortes 17, 18 aufweist. Für jede dabei gefundene Kontaktadresse in einer Nähe des Halteortes 17, 18 wird zumindest eine Information des dazu gehörenden Adressdatenbankeintrags als eine dem Halteort 17, 18 zugeordnete Zusatzinformation gespeichert.

Alternativ oder zusätzlich dazu kann ermittelt werden, ob und welche anderen Kommunikationsgeräte mit einem Mobilgerät 15 beim Erreichen des Halteortes 17, 18 verbunden sind und dies wird als eine dem Halteort 17, 18 zugeordnete Zusatzinformation gespeichert. Sind weitere Adressdatenbanken zusätzlicher Mobilgeräte verfügbar, kann die zweite Schnittstelle 12 dazu eingerichtet sein, eine Verbindung zu den zusätzlichen Mobilgeräten aufzubauen. Zum Beispiel wird zunächst eine Verbindung mit dem Mobilgerät des Nutzers des Navigationssystems 3 aufgebaut und anschließend eine Verbindung mit einem zusätzlichen Mobilgerät eines weiteren Fahrzeuginsassen.

Vorzugsweise wird während einer Fahrt des Fahrzeugs 1 automatisch in Abhängigkeit von einer aktuellen Position des Fahrzeugs 1 und/oder von einer Fahrtrichtung der Fahrt und/oder von einer aktuellen Uhrzeit ein Datenbankeintrag der Datenbank 10 mit einem für die Fahrt wahrscheinlichen Fahrtziel ermittelt, aktualisiert und als ein von dem Nutzer auswählbares Fahrtziel mittels der Ausgabeeinheit 7 ausgegeben. Dies wird insbesondere durchgeführt, wenn der Nutzer das Fahrzeug 1 nutzt, ohne selbst bei Fahrtantritt ein Fahrtziel für die Fahrt eingegeben oder ausgewählt zu haben. Der Nutzer braucht dann nur noch ein vorgeschlagenes Fahrtziel auswählen, um eine Zielführung zu dem ausgewählten Fahrtziel zu starten.

Wenn z. B. in der Datenbank 10 bereits ein Datenbankeintrag gespeichert ist, der als Fahrtziel eine Arbeitsstelle des Nutzers aufweist und dieses Fahrtziel mit einer regelmäßigen morgendlichen Fahrtantrittszeit (beispielsweise wochentags 7 Uhr) verknüpft ist, wird an den Nutzer bei einem Fahrtantritt zu dieser Fahrtantrittszeit beispielsweise das Fahrtziel "Arbeitsstelle" als vorgeschlagenes Fahrtziel ausgegeben. Wenn während der Fahrt jedoch festgestellt wird, dass die Fahrt wahrscheinlich ein anderes Fahrtziel hat, da die Fahrtrichtung der Fahrt von der Richtung zu der Arbeitsstelle abweicht, wird ein neues vorzuschlagendes Fahrtziel ermittelt und an den Nutzer ausgegeben, beispielsweise ein vorgeschlagenes Fahrtziel, das unter allen Datenbankeinträgen der Datenbank 10 ein in der aktuellen Fahrtrichtung nächstgelegenes Fahrtziel repräsentiert.

Alternativ oder zusätzlich kann ein vorgeschlagenes Fahrtziel ausgegeben werden, das unter allen Datenbankeinträgen der Datenbank 10 ein der aktuellen Fahrzeugposition nächstgelegenes Fahrtziel repräsentiert. Ferner kann bei der Ermittlung eines vorzuschlagenden Fahrtziels berücksichtigt werden, ob ein bestimmtes Handy mit dem Navigationssystem gekoppelt ist, oder ob die Beladung des Fahrzeugs 1 auf eine längere Reise hindeutet. Die vorgeschlagenen Fahrtziele werden in Abhängigkeit von den Änderungen der Fahrzeugposition des Fahrzeugs 1 und der Fahrtrichtung der Fahrt aktualisiert und gegebenenfalls geändert.

## Patentansprüche

1. Verfahren zum Betreiben eines Navigationssystems (3) eines Fahrzeugs (1), das zur Ermittlung und Ausgabe einer Fahrtroute (22) zu einem von einem Nutzer des Navigationssystems (3) vorgebbaren Fahrtziel ausgebildet ist, wobei
- eine Datenbank (10) für von dem Nutzer auswählbare Datenbankeinträge, die jeweils ein Fahrtziel aufweisen, geführt wird,
- ein Ort, an dem das Fahrzeug (1) anhält, als ein zu speichernder Halteort (17, 18) eingestuft wird, wenn ein vorgegebenes erstes Bewertungskriterium erfüllt ist,
- für jeden als Halteort (17, 18) eingestuften Ort automatisch eine Zielinformation, die eine Position des Halteortes (17, 18) und eine dem Halteort (17, 18) zugeordnete Zusatzinformation aufweist, ermittelt wird,
- mehrere Halteorte (17, 18) als zusammenzufassen eingestuft werden, wenn ein vorgegebenes zweites Bewertungskriterium erfüllt ist,
- die Zielinformationen für die Halteorte (17, 18), die als zusammenzufassen eingestuft werden, automatisch zu einem Datenbankeintrag zusammengefasst und in der Datenbank (10) gespeichert werden,
- als Fahrtziel eines Datenbankeintrags für als zusammenzufassen eingestufte Halteorte (17, 18) ein die gespeicherten Positionen dieser Halteorte (17, 18) aufweisendes Zielgebiet (20) in der Datenbank (10) gespeichert wird, und
- die Zielinformation für jeden Halteort (17, 18), der nicht als mit einem anderen Halteort (17, 18) zusammenzufassen eingestuft wird, entweder als ein separater Datenbankeintrag der Datenbank (10) oder unabhängig von der Datenbank (10) gespeichert wird.

2. Verfahren nach Anspruch 1,
**dadurch gekennzeichnet, dass** ein erster Zeitschwellenwert und ein zweiter Zeitschwellenwert vorgegeben werden und das erste Bewertungskriterium als erfüllt gilt, wenn das Fahrzeug (1) an dem Ort für die Dauer des ersten Zeitschwellenwertes mit ausgeschaltetem Motor und ausgeschalteter Zielführungsfunktion des Navigationssystems (3) anhält oder das Fahrzeug (1) an dem Ort für die Dauer des zweiten Zeitschwellenwertes mit ausgeschaltetem Motor und eingeschalteter Zielführungsfunktion des Navigationssystems (3) anhält.

3. Verfahren nach einem der vorhergehenden Ansprüche,
**dadurch gekennzeichnet, dass** bei einer Auswahl des Fahrtziels, das als das Zielgebiet (20) in der Datenbank (10) gespeichert ist, eine Fahrtroute (22) zu einem Randort (24) auf einem Rand (26) des Zielgebiets (20) ermittelt wird.

4. Verfahren nach einem der vorhergehenden Ansprüche,
**dadurch gekennzeichnet, dass** eine Bewertungsentfernungsdifferenz vorgegeben wird und das zweite Bewertungskriterium als erfüllt gilt, wenn die Positionen jedes Paares der Halteorte (17, 18) nicht mehr als die Bewertungsentfernungsdifferenz voneinander entfernt sind.

5. Verfahren nach Anspruch 4,
**dadurch gekennzeichnet, dass** als Zielgebiet (20) ein Gebiet mit dem Durchmesser der vorgegebenen Bewertungsentfernungsdifferenz gespeichert wird.

6. Verfahren nach Anspruch 4 oder 5,
**dadurch gekennzeichnet, dass** eine Bewertungsuhrzeitdifferenz, eine Bewertungsanzahldifferenz und/oder eine Bewertungsbelegungsdifferenz vorgegeben werden und das zweite Bewertungskriterium als erfüllt gilt, wenn sich Uhrzeiten, zu denen die Halteorte (17, 18) erreicht werden, um nicht mehr als die Bewertungsuhrzeitdifferenz voneinander unterscheiden, wenn sich erfasste Fahrzeuginsassenanzahlen von Fahrzeuginsassen des Fahrzeugs (1) bei dem Erreichen der Halteorte (17, 18) um nicht mehr als die Bewertungsanzahldifferenz voneinander unterscheiden, beziehungsweise wenn sich erfasste Kofferraumbelegungen eines Kofferraums des Fahrzeugs (1) bei dem Erreichen der Halteorte (17, 18) um nicht mehr als die Bewertungsbelegungsdifferenz voneinander unterscheiden.

7. Verfahren nach einem der vorhergehenden Ansprüche,
**dadurch gekennzeichnet, dass** als Zusatzinformation ein Straßenname einer Straße, an der oder in einer Nähe derer sich der Halteort (17, 18) befindet, ein Name einer Sehenswürdigkeit, die sich in einer Nähe des Halteortes (17, 18) befindet, ein Name eines öffentlichen Gebäudes, das sich in einer Nähe des Halteortes (17, 18) befindet, und/oder ein Ortsname eines Orts oder eines Ortsteils, in dem sich der Halteort (17, 18) befindet, ermittelt und gespeichert werden.

8. Verfahren nach einem der vorhergehenden Ansprüche,
**dadurch gekennzeichnet, dass** für jeden Halteort (17, 18) geprüft wird, ob eine Adressdatenbank eines Mobilgerätes (15) zur Auswertung verfügbar ist, und, wenn das der Fall ist, für die Adressdatenbank ermittelt wird, ob die Adressdatenbank einen Adressdatenbankeintrag mit einer Kontaktadresse in einer Nähe des Halteortes (17, 18) aufweist, und, wenn das der Fall ist, für die Kontaktadresse eine Information des dazu gehörenden Adressdatenbankeintrags als eine dem Halteort (17, 18) zugeordnete Zusatzinformation gespeichert wird.

9. Verfahren nach einem der vorhergehenden Ansprüche,
**dadurch gekennzeichnet, dass** während einer Fahrt des Fahrzeugs (1) automatisch in Abhängigkeit von einer aktuellen Position des Fahrzeugs (1) und/oder von einer Fahrtrichtung der Fahrt und/oder von einer aktuellen Uhrzeit ein Datenbankeintrag der Datenbank (10) mit einem für die Fahrt wahrscheinlichen Fahrtziel ermittelt, aktualisiert und als ein von dem Nutzer auswählbares Fahrtziel ausgegeben wird.

10. Navigationssystem (3), umfassend
- eine Navigationssteuereinheit (5) zur Ermittlung einer Fahrtroute (22) für ein Fahrzeug (1) zu einem von einem Nutzer des Navigationssystems (3) vorgebbaren Fahrtziel,
- eine Ausgabeeinheit (7) zur Ausgabe einer ermittelten Fahrtroute (22) und
- eine Speichereinheit (9) zur Speicherung einer Datenbank (10), in der von dem Nutzer auswählbare Datenbankeinträge, die jeweils ein Fahrtziel aufweisen, speicherbar sind,
wobei die Navigationssteuereinheit (5) dazu ausgebildet ist,
- einen Ort, an dem das Fahrzeug (1) anhält, zu ermitteln und als einen zu speichernden Halteort (17, 18) einzustufen, wenn ein vorgegebenes erstes Bewertungskriterium erfüllt ist,
- für jeden als Halteort (17, 18) eingestuften Ort automatisch eine Zielinformation, die eine Position des Halteortes (17, 18) und eine dem Halteort (17, 18) zugeordnete Zusatzinformation aufweist, zu ermitteln,
- mehrere Halteorte (17, 18) als zusammenzufassen einzustufen, wenn ein vorgegebenes zweites Bewertungskriterium erfüllt ist,
- die Zielinformationen für die Halteorte (17, 18), die als zusammenzufassen eingestuft werden, zu einem Datenbankeintrag zusammenzufassen und in der Datenbank (10) zu speichern,
- als Fahrtziel eines Datenbankeintrags für als zusammenzufassen eingestufte Halteorte (17, 18) ein die gespeicherten Positionen dieser Halteorte (17, 18) aufweisendes Zielgebiet (20) in der Datenbank (10) zu speichern, und
- die Zielinformation für jeden Halteort (17, 18), der nicht als mit einem anderen Halteort (17, 18) zusammenzufassen eingestuft wird, entweder als einen separaten Datenbankeintrag der Datenbank (10) oder unabhängig von der Datenbank (10) zu speichern.

## Claims

1. Method of operating a navigation system (3) of a vehicle (1) configured for determination and output of a travel route (22) to a destination predetermined by a user of the navigation system (3), whereby
- a database (10) is kept for database entries eligible by the user, which respectively contain a destination,
- a location, at which the vehicle (1) stops, is graded as a stop location (17, 18) to be filed, if a specified first assessment criterion is fulfilled,
- for each as stop location (17, 18) graded location automatically a destination information containing a position of the stop location (17, 18) and an additional information allocated to the stop location (17, 18) is determined,
- several stop locations (17, 18) are graded as to summarize, if a specified second assessment criterion is fulfilled,
- the destination information for the stop locations (17, 18), which are graded as to summarize, are automatically summarized to a database entry and filed in the database (10),
- as destination of a database entry for stop locations (17, 18) graded as to summarize a destination area (20) containing the filed positions of these stop locations (17, 18) is filed in the database (10), and
- the destination information for each stop location (17, 18), which is not graded to be summarized with another stop location (17, 18), is filed either as a separate database entry in the database (10) or independent from the database (10).

2. Method according to claim 1,
**characterized in that** a first time threshold value and a second time threshold value are specified and that the first assessment criterion deemed to be fulfilled, when the vehicle (1) stops at the location for the period of the first time threshold value with engine switched off and route guidance function of the navigation system (3) switched off or the vehicle (1) stops at the location for the period of the second time threshold value with engine switched off and route guidance function of the navigation system (3) switched on.

3. Method according to one of the proceeding claims,
**characterized in that** on selection of the destination, which is filed as the destination area (20) in the database (10), a travel route (22) to a border location (24) on a border (26) of the destination area (20) is determined.

4. Method according to one of the proceeding claims,
**characterized in that** an assessment distance difference is specified and that the second assessment criterion deemed to be fulfilled, when the positions of each pair of the stop locations (17, 18) are not more away from each other than the assessment distance difference.

5. Method according to claim 4,
**characterized in that** as destination area (20) an area with the diameter of the specified assessment distance difference is filed.

6. Method according to claims 4 or 5,
**characterized in that** an assessment time difference, an assessment quantity difference and/or an assessment occupancy difference are specified and that the second assessment criterion deemed to be fulfilled, when times, at which the stop locations (17, 18) are reached, do not differ more from each other than the assessment time difference, when detected quantities of vehicle occupants of the vehicle (1) at reaching at the stop locations (17, 18) do not differ more from each other than the assessment quantity difference respectively when detected trunk occupancies of a trunk of the vehicle (1) at reaching at the stop locations (17, 18) do not differ more from each other than the assessment occupancy difference.

7. Method according to one of the proceeding claims,
**characterized in that** as additional information a street name, at which or close to which the stop location (17, 18) is located, a name of a sight, which is located nearby the stop location (17, 18), a name of a public building, which is located nearby the stop location (17, 18), and/or a location name of a location or a district, at which the stop location (17, 18) is located, are determined and filed.

8. Method according to one of the proceeding claims,
**characterized in that** for each stop location (17, 18) it is checked if an address database of a mobile device (15) is available for evaluation, and, if this is the case, it is determined for the address database if the address database contains an address database entry with a contact address nearby the stop location (17, 18), and, if this is the case, for the contact address an information of the associated address database entry is filed as an additional information allocated to the stop location (17, 18).

9. Method according to one of the proceeding claims,
**characterized in that** during a drive of the vehicle (1) automatically depending on a current position of the vehicle (1) and/or a direction of the drive and/or a current time a database entry in the database (10) with a probable destination for the drive is determined, refreshed and issued as a selectable destination by the user.

10. Navigation system (3), containing
- a navigation control unit (5) for determining a travel route (22) for a vehicle (1) to a destination predetermined by a user of the navigation system (3),
- an output unit (7) for issuing a determined travel route (22) and
- a storage unit (9) for storing a database (10), in which database entries eligible by the user, which respectively contain a destination, are storable,
whereby the navigation control unit (5) is configured
- to determine a location at which the vehicle (1) stops und grade as a stop location (17, 18) to be filed, if a specified first assessment criterion is fulfilled,
- to determine for each as stop location (17, 18) graded location automatically a destination information containing a position of the stop location (17, 18) and an additional information allocated to the stop location (17, 18),
- to grade several stop locations (17, 18) as to summarize, if a specified second assessment criterion is fulfilled,
- to summarize the destination information for the stop locations (17, 18), which are graded as to summarize, to a database entry and file in the database (10),
- to file as destination of a database entry for stop locations (17, 18) graded as to summarize a destination area (20) containing the filed positions of these stop locations (17, 18) in the database (10), and
- to file the destination information for each stop location (17, 18), which is not graded to be summarized with another stop location (17, 18), either as a separate database entry in the database (10) or independent from the database (10).

## Revendications

1. Procédé permettant d'exploiter un système de navigation (3) d'un véhicule (1), configuré pour déterminer et afficher un itinéraire (22) pour une destination spécifiée par un utilisateur du système de navigation (3), **caractérisé en ce que**
- une base de données (10) est gérée pour des entrées de base de données pouvant être sélectionnées par l'utilisateur et comprenant chacune une destination,
- un lieu où le véhicule (1) s'arrête est classé en tant que lieu d'arrêt à enregistrer (17, 18) lorsqu'un premier critère d'évaluation spécifié est rempli,
- une information de destination comprenant une position du lieu d'arrêt (17, 18) et une information complémentaire affectée au lieu d'arrêt (17, 18) est automatiquement déterminée pour chaque lieu classé comme lieu d'arrêt (17, 18),
- plusieurs lieux d'arrêt (17, 18) sont classés comme devant être regroupés lorsqu'un deuxième critère d'évaluation spécifié est rempli,
- les informations de destination des lieux d'arrêt (17, 18) classés comme devant être regroupés sont automatiquement regroupées dans une entrée de base de données et enregistrées dans la base de données (10),
- un périmètre de destination (20) comprenant les positions enregistrées de ces lieux d'arrêt (17, 18) est enregistré dans la base de données (10) en tant que destination d'une entrée de base de données pour les lieux d'arrêt (17, 18) classés comme devant être regroupés, et
- l'information de destination de chaque lieu d'arrêt (17, 18) qui n'est pas classé comme devant pas être regroupé avec un autre lieu d'arrêt (17, 18) est enregistrée soit comme entrée de base de données séparée dans la base de données (10), ou indépendamment de la base de données (10).

2. Procédé selon la revendication 1,
**caractérisé en ce qu'**un premier seuil de temps et un deuxième seuil de temps sont spécifiés et que le premier critère d'évaluation est considéré comme rempli lorsque le véhicule (1) s'arrête sur le lieu pendant la durée du premier seuil de temps, moteur coupé et fonction de guidage vers la destination désactivée sur le système de navigation (3), ou que le véhicule (1) s'arrête sur le lieu pendant la durée du deuxième seuil de temps, moteur coupé et fonction de guidage vers la destination activée sur le système de navigation (3).

3. Procédé selon l'une des revendications précédentes,
**caractérisé en ce que**, lorsque la destination enregistrée en tant que périmètre de destination (20) dans la base de données (10) est sélectionnée, un itinéraire (22) menant à un lieu périphérique (24) situé en périphérie (26) du périmètre de destination (20) est déterminé.

4. Procédé selon l'une des revendications précédentes,
**caractérisé en ce qu'**une différence de distance d'évaluation est spécifiée et que le deuxième critère d'évaluation est considéré comme rempli lorsque les positions de chaque paire de lieux d'arrêt (17, 18) ne sont pas éloignées l'une de l'autre de plus de la différence de distance d'évaluation.

5. Procédé selon la revendication 4,
**caractérisé en ce qu'**une zone ayant le diamètre de la différence de distance d'évaluation est enregistrée en tant que périmètre de destination (20).

6. Procédé selon les revendications 4 ou 5,
**caractérisé en ce qu'**une différence d'heure d'évaluation, une différence de nombre d'évaluation et/ou une différence de chargement d'évaluation sont spécifiées et que le deuxième critère d'évaluation est considéré comme rempli lorsque les heures auxquelles les lieux d'arrêt (17, 18) sont atteints ne divergent pas de plus de la différence d'heure d'évaluation, que les nombres enregistrés d'occupants du véhicule (1) ne divergent pas de plus de la différence de nombre d'évaluation lorsque les lieux d'arrêt (17, 18) sont atteints, et que les chargements enregistrés du coffre du véhicule (1) ne divergent pas de plus de la différence de chargement d'évaluation lorsque les lieux d'arrêt (17, 18) sont atteints.

7. Procédé selon l'une des revendications précédentes,
**caractérisé en ce qu'**un nom de rue d'une rue dans laquelle ou à proximité de laquelle se trouve le lieu d'arrêt (17, 18), un nom d'une attraction touristique se trouvant à proximité du lieu d'arrêt (17, 18), un nom d'un bâtiment public se trouvant à proximité du lieu d'arrêt (17, 18) et/ou un nom de lieu d'un lieu ou d'une partie de ce lieu, dans lequel ou laquelle se trouve le lieu d'arrêt (17, 18) sont déterminés et enregistrés en tant qu'information complémentaire.

8. Procédé selon l'une des revendications précédentes,
**caractérisé en ce que** la disponibilité, ou non, d'une base d'adresses pouvant être exploitée sur un appareil portable (15) est vérifiée pour chaque lieu d'arrêt (17, 18), que, si c'est le cas, la présence, ou non, d'une entrée de base d'adresses comportant une adresse de contact à proximité du lieu d'arrêt (17, 18) est vérifiée dans la base d'adresses et que, si c'est le cas, une information de l'entrée de base de données associée est enregistrée en tant qu'information complémentaire affectée au lieu d'arrêt (17, 18) pour l'adresse de contact.

9. Procédé selon l'une des revendications précédentes,
**caractérisé en ce que**, pendant un trajet du véhicule (1), une entrée de la base de données (10), avec la destination probable du trajet, est automatiquement déterminée en fonction de la position actuelle du véhicule (1) et/ou du sens du trajet et/ou de l'heure actuelle, mise à jour et affichée en tant que destination pouvant être sélectionnée par l'utilisateur.

10. Système de navigation (3), comprenant
- une unité de commande de navigation (5) servant à déterminer un itinéraire (22) pour un véhicule (1) et une destination pouvant être spécifiée par un utilisateur du système de navigation (3),
- une unité d'affichage (7) permettant d'afficher l'itinéraire déterminé (22) et
- une unité mémoire (9) servant à enregistrer une base de données (10) dans laquelle des entrées de base de données pouvant être sélectionnées par l'utilisateur et comprenant chacune une destination peuvent être enregistrées,
l'unité de commande de navigation (5) étant configurée de manière
- à déterminer un lieu où le véhicule (1) s'arrête et à classer ce lieu en tant que lieu d'arrêt à enregistrer (17, 18) lorsqu'un premier critère d'évaluation spécifié est rempli,
- à déterminer automatiquement une information de destination comprenant une position du lieu d'arrêt (17, 18) et une information complémentaire affectée au lieu d'arrêt (17, 18) pour chaque lieu classé comme lieu d'arrêt (17, 18),
- à classer plusieurs lieux d'arrêt (17, 18) comme devant être regroupés lorsqu'un deuxième critère d'évaluation spécifié est rempli,
- à regrouper automatiquement les informations de destination des lieux d'arrêt (17, 18) classés comme devant être regroupés dans une entrée de base de données et à les enregistrer dans la base de données (10),
- à enregistrer un périmètre de destination (20) comprenant les positions enregistrées de ces lieux d'arrêt (17, 18) dans la base de données (10) en tant que destination d'une entrée de base de données pour les lieux d'arrêt (17, 18) classés comme devant être regroupés, et
- à enregistrer l'information de destination de chaque lieu d'arrêt (17, 18) qui n'est pas classé comme devant pas être regroupé avec un autre lieu d'arrêt (17, 18) soit comme entrée de base de données séparée dans la base de données (10), ou indépendamment de la base de données (10).
